# EUROPEAN PATENT SPECIFICATION

(11) **EP 3 105 407 B1**
(45) Date of publication and mention of the grant of the patent: **05.12.2018**
(21) Application number: 15749622.5
(22) Date of filing: 12.02.2015
(51) Int. Cl.: E21B 17/042, F16L 15/00, E21B 17/04, E21B 17/08, F16L 15/08, F16L 27/10, F16L 27/108

(54) **PIPE COUPLING WITH LOAD DEFLECTING REGION**
ROHRKUPPLUNG MIT LASTABLENKUNGSBEREICH
RACCORD DE CONDUITE À RÉGION DE DÉVIATION DE CHARGE

(30) Priority: 12.02.2014 US 201461938722 P
(43) Date of publication of application: 21.12.2016
(73) Proprietor: RGL Reservoir Management Inc., Nisku AB T9E 8J8 (CA)
(72) Inventor: CLAERHOUT, Mike, Beaumont, Alberta T4X 1G6 (CA); KLIMACK, Brian K., Tofield, Alberta T0B 4J0 (CA); VENNING, Laurie, Calgary, Alberta T2P 3P8 (CA); FERMANIUK, Brent D., Sherwood Park, Alberta T8A 3A5 (CA)
(74) Representative: De Vries & Metman
(86) International application number: PCT/CA2015/050104
(87) International publication number: WO 2015/120553

(56) References cited:
- WO-A1-98/42947
- WO-A1-98/42947
- WO-A1-2005/064218
- WO-A1-2005/064218
- GB-A- 2 472 861
- US-A- 1 889 869
- US-A- 3 572 777
- US-A- 3 572 777
- US-A1- 2007 176 424
- US-A1- 2012 153 611

## Description

### CROSS REFERENCE TO PRIOR APPLICATIONS

The present application claims priority under Paris Convention to US Application Number 61/938,722, filed February 12, 2014.

### FIELD OF THE INVENTION

The present disclosure relates in general to apparatus and methods for connecting sections of pipe, and in particular but not limited to pipe sections connected to form casing strings for oil and gas wells. In one aspect, the disclosure relates to a coupling for connecting two pipe segments in accordance with the preamble of claim 1. Such a coupling is known from GB 2 472 861 A which teaches a coupling for joining pipe segments that is provided with a zone of weakness to accommodate transverse loads. The zone of weakness is formed by reducing the wall thickness in a region of the coupling

### BACKGROUND OF THE INVENTION

Wells for production of hydrocarbon fluids such as oil and natural gas are typically drilled by connecting a drill bit to the lower end of a "drill string" made up of sections (or "joints") of drill pipe connected end-to-end by means of threaded connections, and then rotating a drill bit into the ground until the bit penetrates a hydrocarbon-producing subsurface formation. After the well has been drilled, it is typically necessary to line the wellbore with tubular casing to prevent soil materials from sloughing into the wellbore and thus partially or completely collapsing the wellbore. Accordingly, after the drill string has been withdrawn from the drilled wellbore, a casing string is usually installed in the wellbore. The casing string is made up of pipe sections having a diameter larger than the drill pipe, and slightly smaller than the wellbore.

A typical conventional casing connection consists of a female-threaded "box" end and a male-threaded "pin" end. The box-end threads can be machined directly into the inside diameter of the casing body. Alternatively (and more commonly), the box-end threads can be machined inside a tubular coupling, which is then threaded onto a pin end of a casing joint to form the box end. The pin-end threads are machined directly into the outside diameter of the casing body. When the box-end threads are machined into the casing body, it can sometimes weaken the connection, because material is necessarily removed by the threading. In some cases, the casing body is swaged to allow for material extraction due to threading, such that the net cross-sectional of the threaded zone is not less than the cross-sectional area of unthreaded portion of the casing. In most cases, a connection using a coupling will be sufficiently strong, since the wall thickness of the coupling often exceeds the wall thickness of the casing.

When couplings are used, each casing joint will have a pin at each end. The coupling generally comprises a tubular sleeve with a female-threaded box at each end (known in the field as "box by box"). One box end of the coupling is threaded onto the pin end of a first casing joint (a "pin by box" connection), and then the pin end of a second casing joint is threaded into the other box of the coupling. The procedure described for connecting tubular sections is commonly referred to as "making up" a connection, while the reverse procedure of disconnecting tubular sections is referred to as "breaking out" the connection.

The pin end of a third casing joint is connected in similar fashion to the other box end of the second casing joint, and so on until the casing string has been made up to a desired length. After the complete casing string has been installed in the wellbore, it is cemented into place by introducing a cementitious slurry into the annular space between the outer surface of the casing string and the wellbore.

Wells are most commonly drilled using the drilling and casing procedures described above. However, it has become increasingly common for wells to be drilled using casing as the drill string, with the drill bit being connected to the lower end of the casing string (a procedure commonly referred to as "casing drilling" or "drilling with casing"). When the wellbore reaches the target formation, the casing string is simply cemented into place. This procedure necessitates leaving the drill bit underground, but the cost of the drill bit is outweighed by savings in both time and money by not needing to use a separate drill string and withdraw it from the wellbore, and then running casing into the wellbore in a separate operation.

Oil and gas wells throughout the world have experienced casing connection failures, due to the tensile, compressive, torsional, and/or flexural (i.e., bending) capacities of the connections being exceeded. This has a particular problem in deviated (i.e., non-vertical) wells drilled using directional drilling techniques and requiring comparatively sharp bends (or "doglegs"), and in cases where the subsurface formation is susceptible to movement. Such movement may be induced by hydrocarbon production processes entailing steam injection into the formation, inducing tensile, compressive, torsional, and/or flexural stresses in the casing as a result. One factor influencing such casing connection failures is that the threading on pipe sections commonly used for casing tends to be less robust than the threading on typical drill pipe. Over the years, many alternative connection designs and concepts have been introduced to address these problems, but even "premium" thread designs will fail under severe conditions as mentioned above. In addition, it is notable that casing connection failures can occur notwithstanding the fact that the casing has been cemented into the wellbore.

The foregoing problems are discussed in further detail in the paragraphs that follow, in the context of different drilling scenarios.

### Directional Drilling

When drilling deviated or directional wells, corrections to the direction of the drill bit are continually being made. When abrupt corrections are made to get the drill bit back on track, this can create a severe dogleg in the well. A dogleg refers to an angular change in a drilled wellbore (e.g., a 30° dogleg refers to a total angular change or deflection of 30° in the direction or orientation of the wellbore, as observed or measured over a 100-foot length of the wellbore). When such extreme bends occur in the wellbore, the casing must pass through this dogleg when the casing is run into the wellbore. The casing string and all of the connections between individual casing joints must pass through this bend without being structurally overstressed. Once the casing is installed, one or more casing connections may reside within this dogleg. This will induce structural stresses (mostly bending moment) in the casing and connections in the dogleg area, tending to separate the mating threads in each connection. This can result in drastic reduction in the sealing capability of these threaded connections, and in many cases complete connection failure can occur.

### Steam Injection

Many new well designs, particularly those developed or intended for use in the production of heavy oil or extraction of bitumen from oil sands (or "tar sands" as they are sometimes called), require injection of steam into the hydrocarbon-bearing subsoil formations in order to reduce the viscosity of the oil or bitumen so that it can flow to the surface. One well-known example of this is the steam-assisted gravity drainage process, or SAGD. Such injection of steam can induce localized shifting movements in the formation, which can create tensile, compressive, and/or bending loads acting on the casing connections.

Shifting of subsoil formations is most severe in deviated sections of a well as compared to horizontal sections of the well, but failures can and do occur in both cases. As steam enters and permeates a subsoil mass (such as within an oil sands formation), it pressurizes the formation, thereby creating a balloon-like effect that exerts pressure against adjacent formation zones above, below, and laterally adjacent to the steamed zone. If there is a casing string cemented through adjacent formation zones subject to different pressures, the casing can be subject to extreme structural stresses leading to failure of the casing connections.

Due to the risk of this type of casing failure, many wells will terminate an intermediate casing string above the steamed zone (directional or build section) and continue the horizontal section with another casing string equipped with a movable casing hanger. However, the bottom portion of the intermediate casing will still be subject to steam-induced movement. As a formation expands in volume (due to steam injection) or contracts in volume (due to steam cooling), it will induce loads acting laterally (i.e., transversely) against the casing, thus inducing localized bending stresses in the casing. Such lateral or transverse loads acting on a casing connection will force the pin end of one casing joint to bend within the coupling, thus forcing the male pin threads to separate from the mating female threads on the coupling box, thus reducing the thread contact surface area and, therefore, the effective sealing area of the connection.

In some cases the practical consequences of such lateral loading on a casing connection will not be severe, such as when the casing is under axial compression, which will partially or wholly counteract bending-induced tension stresses in the connections. However, when exacerbated by axial tension in the casing, the weakened connection can either leak or fail (i.e., disconnect) completely.

When casing strings are subjected to a combination of formation movements (e.g., steam-induced) and wellbore builds (e.g., doglegs), connection failure is more likely. Most severe doglegs appear to occur towards the bottom of the build section of the well, as target requirements are met. As well, most formation movement tends to occur in this same area. When lateral loads are applied to a casing connection, the pin end will bend and separate the pin threads from the box threads in the coupling. Since there is nothing to hold the two mating threads together, the strength of the connection is weakened due to a decrease in thread contact area.

A typical connection failure occurs when threads are highly stressed resulting in the pipe coupling to expand radially and allowing the threads to displace over one another. This results in a leak path to form and/or a catastrophic failure of the coupling connection. This is typically caused when highly stressed threads in tension are subjected to additional loads of bending or torsion. Many commercially available thread designs have been designed to overcome these stresses, or at least elevate the acceptable stress limit. Another typical connection failure occurs when the coupling is essentially axially rigid with respect to the casing pipe, and where the connection is subjected to simultaneous axial tension and bending of high magnitude. The typical failure of this example of connection results in localized yielding of the casing at the start of the thread that is cut into the outside of the casing to form the pin thread. This localized yielding is created by very high stresses in a small area, and if significant strain is added to this stress, ultimate casing failure will result.

Examples of known couplings that have been proposed are described in the following US patents: 4,712,815; 6,609,735; 7,347,459; and 8,167,340.

There is a need for improved ways of connecting tubular sections, such as connecting casing joints, to minimize loss of sealing capacity and/or structural strength when the tubular connections are subjected, in particular, to lateral loads. Such loads may result from steam-induced formation movements and other types of loads arising due to wellbore configuration (e.g., doglegs in deviated wellbores) or other operational factors.

### SUMMARY OF THE INVENTION

In accordance with the present invention the coupling is characterized as set forth in claim 1. In general, the invention provides a coupling and coupling method for joining two pipes, such as casing joints. In one aspect, the coupling of the invention includes a corrugated section which provides the coupling with a degree of flexion in response to lateral stresses or loads as described above. Such flexion reduces the transmission of the lateral stresses or loads to the threads connecting the coupling to the pipes.

In one aspect, the invention provides a method of connecting two tubular members having threaded ends by providing a coupling having opposed threaded ends, complimentary to the threads provided on the tubular members, and providing the coupling with a geometry that focuses any bending stresses away from the threaded connections.

Thus, in one aspect, the invention provides a pipe coupling for connecting two pipe segments, each of the pipe segments including a pin end comprising a section having a threaded portion provided on the outer surface thereof, the coupling comprising:
- a generally tubular body having a bore extending there-through, an outer surface, an inner surface, and opposed first and second ends;
- the inner surface of each of the first and second ends including threaded portions adapted to engage the threaded portions of a corresponding pipe segment; and the inner surface of the above mentioned corrugation;
- the outer surface of the coupling including the outer surface of the corrugated section whereby the coupling section thickness is maintained to provide torsional stiffness and rigidity, while allowing limited angular deflection generally centrally along the length of the coupling.

In another aspect, the invention provides a coupling for connecting two pipe segments, each of the pipe segments including a pin end comprising a section having a threaded portion provided on an outer surface thereof, the coupling comprising:
- a generally tubular body having a bore extending there-through, an outer surface, an inner surface, and opposed first and second ends; and,
- a corrugated section located between the first and second ends;
- the inner surface of each of the first and second ends including a threaded portion adapted to engage the threaded portion of a corresponding pin end of a pipe segment;
- the corrugated section being adapted to accommodate transverse deflection while maintaining torsional, compression/tension and pressure performance characteristics of the base pipe segments.

In another aspect, the coupling of the invention includes a corrugated section for accommodating bending/transverse stresses normally subjected on the threaded section of the pin and box connection.

In another aspect, the coupling of the invention is designed so that bending/transverse loading does not adversely affect the thread engagement between the pin thread and the box thread.

In another aspect, the coupling of the invention wherein the section thickness and radius of the corrugated section can be tuned to accommodate optimum bending/transverse stiffness, thereby minimizing stress on the adjacent pipes and their relative threads.

In another aspect, the coupling of the invention further comprises first and second centralizer rings, each located at opposite ends of the coupling. The first and second centralizer rings preferably comprise regions of the coupling having reduced inner diameters and are provided on a side of the threaded portions of the coupling opposite to the pin seal ring.

In another aspect, the coupling of the invention includes at least one pin seal ring for bearing against the pin ends of adjacent tubular members. The pin seal ring(s) direct bending/transverse loads into the corrugated section of the coupling.

### BRIEF DESCRIPTION OF THE FIGURES

The features of the invention will become more apparent in the following detailed description in which reference is made to the appended drawings wherein:
Figure 1 is a cross sectional view of a coupling according to an aspect of the invention.
Figure 2 is a cross sectional view of a coupling according to another aspect of the invention.
Figure 3 is a partial cross sectional view of a drawing representing a finite element analysis (FEA) of a coupling according to an aspect of the invention.

### DETAILED DESCRIPTION OF THE INVENTION

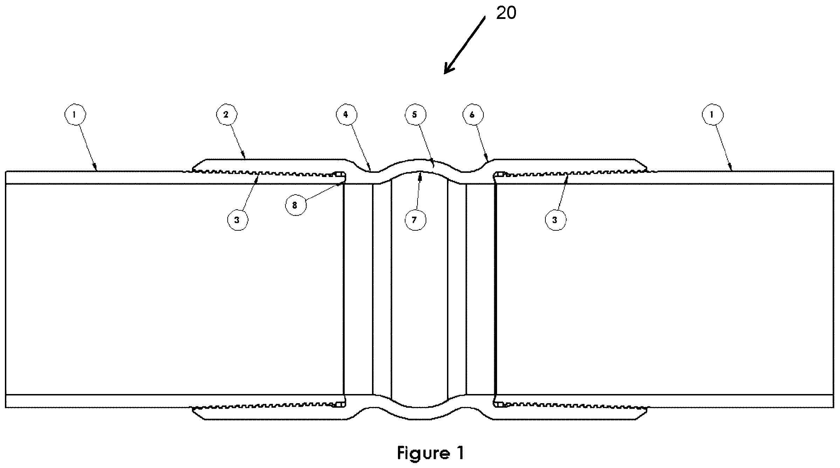

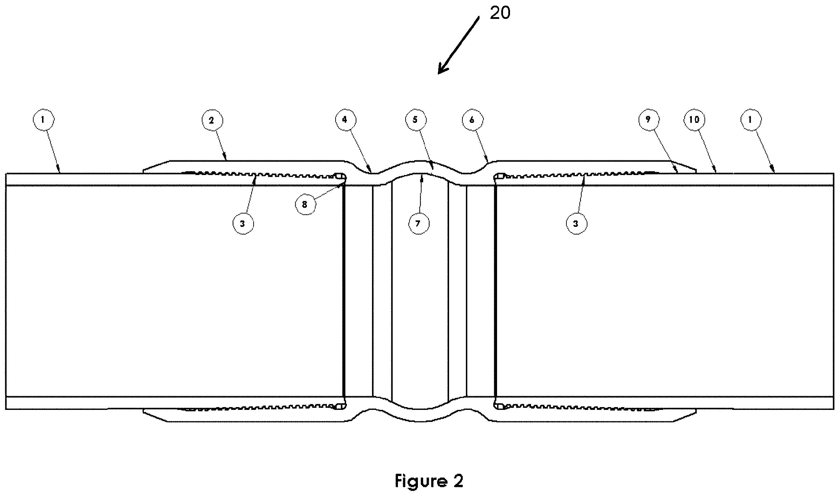

As illustrated in the accompanying Figures 1 and 2, the present disclosure teaches embodiments of a generally cylindrical coupling 2, having a corrugated stress, or strain relief section 20 formed into the body of the coupling. The corrugated section 20 is preferably formed in a central region of the coupling 2. In the embodiment shown in the figures, the corrugated section 20 includes two "valleys" 4 and 6 formed on the outer surface of the coupling 2, one each on opposite sides of a "peak" 5 also formed on the outer surface of the coupling 2. In one aspect of the invention, particularly where the wall thickness of the coupling is maintained generally constant, formation of the peak 5 results in a valley 7 being formed on the inner surface of the coupling 2. The corrugated section 20 has been described herein with the aforementioned peak 5 and valleys 4, 6 and 7. However, it will be understood that the term "corrugated" as used herein is intended to encompass a section having any number of such peaks and valleys. The present description is therefore not limited to the specific embodiment illustrated in the figures.

In the illustrated embodiments, the coupling is symmetrical about a transverse plane passing through the corrugation, or corrugated section 20. However, although this symmetry is convenient for purposes of both manufacture and use of the coupling, it is not essential, and such symmetry could be absent from alternative embodiments.

Figure 1 schematically illustrates a coupling according to one aspect of the invention. As illustrated, the coupling 2, includes a central bore extending between coupling ends. Central bore has an undulating cylindrical bore section adjacent each coupling end, and, typically, each cylindrical bore section transitions with a tapered bore section decreasing in diameter as it progresses inward within coupling 2, with tapered bore section having tapered box threads. For convenience of illustration, the threads are not shown in Figure 1.

In a preferred embodiment of the invention, one or more cylindrical or pin seal rings 8 is/are provided or formed into the coupling, generally in a central region between tapered bore sections. The pin seal ring 8, preferably will have an inside diameter corresponding to the bore of a tubular member 1 that is connected to the coupling. That is, the wall of the ring 8 is sized so as to allow contact with the end face of a tubular member 1 once such member is connected to the coupling. As illustrated in Figures 1 and 2, the axial length and position of cylindrical ring 8, is selected such that when pin end of tubular member 1 is threaded into the coupling 2, it will shoulder tightly against the face of cylindrical ring 8, to preferably form a fluid-tight metal-to-metal seal as known in the art. Having regard to this functionality, the cylindrical ring 8, may be alternatively referred to as a pin seal ring. As also shown in Figures 1 and 2, the coupling 2 is preferably provided with essentially two pin seal rings 8, each adapted to abut respective pin ends of tubular members 1. Nevertheless, the pin seal rings will be referred to herein in the singular as they function as a single element having two opposed faces. As will be understood in reviewing the present description the presence of the pin seal ring 8 on the coupling is preferred but not mandatory. In a preferred embodiment, the pin seal ring 8 is formed as part of the inner surface of the coupling. In another embodiment, the pin seal ring may be a separate element provided or placed within the bore of the coupling. The pin seal ring 8 is also helpful in directing any deflection stresses towards the central body portion of the coupling 2 and away from the threaded connections between the coupling and the tubular members 1.

Some prior art connection designs rely on thread-to-thread contact to provide a fluid-tight seal within the coupling, but such connections have often been found to not adequately transfer bending loads away from the coupled area. However, with the preferred structure of the coupling as illustrated in Figures 1 and 2, effective load transfer is maintained even if thread separation should occur, because the pin end of each tubular member 1 will remain shouldered against a respective pin seal ring 8 under loading conditions.

Optionally, in one aspect of the invention, the coupling 2 may be provided with a centralizer, or load deflection ring 9, as shown in Figure 2. The centralizer ring 9 serves to enhance and/or maintain the effectiveness of angular load transfer between the end of the pin and the pin seal ring 8, and remove the transverse load from the threads 3. In one aspect, the bore of the coupling 2 is preferably machined to form the centralizer ring 9 adjacent to each end of coupling 2, outboard of box threads 3. In one aspect of the invention, the inside diameter of each centralizer ring 9 is preferably sized to provide a close-tolerance fit to the outside diameter of tubular members 1. This further ensures that the pin end of a tubular member 1 will remain square to the respective face of pin seal ring 8 notwithstanding external loadings inducing bending in the tubing string. In addition, the centralizer ring 9 serves to mitigate against the transmission of lateral stresses or loads encountered by the casing string from being absorbed by the threads 3 and transferring those loads into the corrugated section 20 of the coupling 2 and then onto the body of the attached tubular member 1. In particular, as the tubular member 1 and pin bends (or tries to bend) within coupling 2, centralizer ring 9 and pin seal ring 8 will react against the outer surface and pin face of tubular member 1 and thus prevent any deformation of the pin end within coupling 2 that would otherwise induce thread separation of pin and box threads 3 within coupling 2.

To promote even greater effectiveness of centralizer rings 9 for this purpose, each end of tubular member 1 may be machined in a peripheral region adjacent to the pin threads 10 to ensure a precise fit within centralizer rings 9, thereby allowing for a degree of cross-sectional out-of-roundness that can be exhibited by conventionally manufactured pipe.

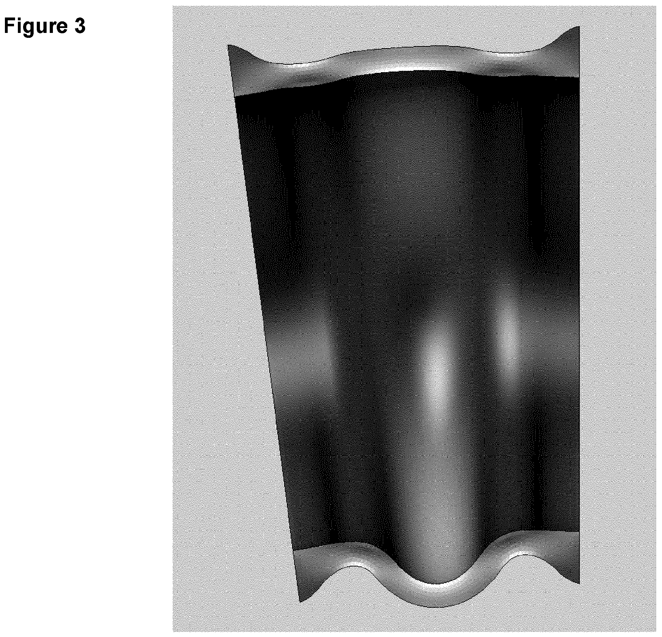

Because centralizer rings 9 will hold pin threads and box threads 3 concentrically together within coupling 2, axial tension and compression capacity through the coupling will not be reduced as would be the case in a coupling subject to thread separation induced by bending moments and transverse forces induced in or exerted against the tubular string. Further, coupling 2 with pin seals 8, with centralizer rings 9 dramatically reduce bending/transverse loading on threads 3 by allowing deflection via the coupling corrugated section 20 as shown in Figure 3.

An additional benefit of centralizer rings 9, when provided, is that they can serve as a stabbing guide during connection make-up operations.

As will be understood by persons skilled in the art, the corrugated section 20 is designed and configured to ensure that coupling 2 as a whole maintains sufficient structural strength to resist anticipated in-service loadings. In some cases this may require the cross-section through the corrugated section 20 to have the same axial compression and tension capacity as the tubular members 1 being connected, but this will not necessarily be the case (as loading conditions may vary, and in some cases the structural strength of the selected tubular members may significantly exceed design requirements).

Coupling 2 is compatible with or can be adapted to use any known thread design used to connect oilfield tubulars. Many existing coupling designs are configured to provide for nose-to-nose sealing of the pin ends of the tubular members being connected when they are screwed into the coupling. Analogous seals will be effected using couplings in accordance with the present disclosure, but instead of the two pin noses sealing against each other, they will seal against pin seal ring 8. Because the location of pin seal ring 9 in relation to box threads can be precisely controlled during the manufacture of coupling 2, sealing problems arising from inaccurate make-up of conventional couplings are prevented. For example, if a conventional coupling is screwed too far onto the pin end of a first tubular member, the pin end of a second tubular screwed into the other box of the coupling may abut the pin end of the first tubular before the tapered pin threads of the second tubular have fully engaged the mating box threads in the coupling. Thus limiting the ability to transfer bending or transverse loads through the coupling into the adjacent tubular member. This problem cannot occur using couplings in accordance with the present disclosure since the pin seal ring 8 serves to limit the length of the tubular member 1 that can be accommodated within the coupling 2.

In alternative embodiments, coupling 2 can be manufactured without pin seal ring 8, to accommodate connections that do not require a pin nose seal, however transverse/bending loading resistance may be limited.

In summary, when lateral loads are applied to a casing string made up with connections in accordance with the present disclosure, stresses induced in the threads of the coupling and pipe at pin end will be less than they would be using conventional couplings. The coupling is designed to transfer the deflection stress away from the threaded section and into the corrugated section 20 where the stress can be accommodated. The combination of the centralizer rings 9 and the pin seal ring 8 will maintain the substantially axial relationship of the pin and box thread regardless of bending/lateral stresses applied to the casing string. The centralizer rings can also serve as stabbing guides during connection make-up.

The corrugated section 20 located at the center of the coupling will act as a flex point in response to induced bending stresses, thereby reducing bending-induced deflections that might cause partial thread separation within the connection, but without reducing the structural strength of the connection below design requirements. This flexible section can be tuned with geometry and section thickness to provide a wide range of bending resistance properties as desired.

As discussed above, the coupling of the present invention allows for any stresses imposed on the tubing string to be diverted away from the threaded connections of the coupling. Such stresses are instead transferred to the corrugated section 20 and/or to the body of the adjacent tubular member(s), which are generally designed or adapted to bend. As such, the coupling of the invention can be "tuned" as indicated above to allow the coupling to absorb as much of the stresses as needed. That is, in some cases, it may be preferred for the coupling to be designed to have less than or greater than the strength of the adjacent tubular members. This would therefore allow the coupling to absorb less or more of the bending stresses that may develop. The ability of the coupling to be adapted in such a manner allows for the tailoring of where bending or flexure of the tubing string will occur and also avoids any kinking of the tubing string that may occur. As known in the art, kinking of the tubing string results in an obstruction in the lumen of the tubing string, which may prevent the running of tooling etc. there-through.

It will be readily appreciated by those skilled in the art that various modifications of the disclosed embodiments may be devised without departing from the scope and teaching of the present disclosure, including modifications which may use equivalent structures or materials hereafter conceived or developed. It is to be especially understood that the present disclosure is not intended to be limited to any described or illustrated embodiment, and that the substitution of a variant of a disclosed or claimed element or feature, without any substantial resultant change in operation or functionality, will not constitute a departure from the scope of the disclosure. It is also to be appreciated that the different teachings of the embodiments described and discussed herein may be employed separately or in any suitable combination to produce desired results.

In this patent document, any form of the word "comprise" is to be understood in its non-limiting sense to mean that any item following such word is included, but items not specifically mentioned are not excluded. A reference to an element by the indefinite article "a" does not exclude the possibility that more than one such element is present, unless the context clearly requires that there be one and only one such element. Any use of any form of the terms "connect", "engage", "couple", "attach", or any other term describing an interaction between elements is not meant to limit the interaction to direct interaction between the subject elements, and may also include indirect interaction between the elements such as through secondary or intermediary structure. Relational terms such as "parallel", "perpendicular", "coincident", "intersecting", and "equidistant" are not intended to denote or require absolute mathematical or geometrical precision. Accordingly, such terms are to be understood as denoting or requiring substantial precision only (e.g., "substantially parallel") unless the context clearly requires otherwise. As used in this document, the terms "typical" and "typically" are used in the sense of representative or common usage or practice, and are not to be understood as implying essentiality or invariability.

Although the invention has been described with reference to certain specific embodiments, various modifications thereof will be apparent to those skilled in the art. Any examples provided herein are included solely for the purpose of illustrating the invention and are not intended to limit the invention in any way. Any drawings provided herein are solely for the purpose of illustrating various aspects of the invention and are not intended to be drawn to scale or to limit the invention in any way. The scope of the claims appended hereto should not be limited by the preferred embodiments set forth in the above description, but should be given the broadest interpretation consistent with the present specification as a whole.

## Claims

1. A coupling (2) for connecting two pipe segments (1), each of the pipe segments including a pin end comprising a section having a threaded portion provided on an outer surface thereof, the coupling comprising:
- a generally tubular body having a bore extending there-through, an outer surface, an inner surface, and opposed first and second ends; and,
- a corrugated section (20) located between the first and second ends;
- the inner surface of each of the first and second ends including a threaded portion (3) adapted to engage the threaded portion of a corresponding pin end of a pipe segment (1);
- **characterized in that**:
- the coupling (2) has a generally constant wall thickness; and,
- the corrugated section (20) comprises a cross section having at least one peak (5) on the outer surface thereof, whereby, when in use, the coupling (2) is adapted to accommodate transverse deflection while maintaining torsional, compression/tension and pressure performance characteristics of the pipe segments.

2. The coupling (2) as claimed in claim 1, wherein the corrugated section comprises a cross sectional profile having at least one peak (5) and at least two valleys (4, 6) formed on the outer surface of the coupling (2).

3. The coupling (2) as claimed in claim 1 or 2, wherein the corrugated section is located generally centrally along the length of the tubular body.

4. The coupling (2) as claimed in any one of claims 1 to 3, wherein the wall thickness and size of corrugations is adapted to provide a predetermined bending/transverse stiffness, thereby minimizing stress on the threaded connections between the coupling and the pipe segments.

5. The coupling (2) as claimed in any one of claims 1 to 4, wherein the first and second ends comprise, respectively, first and second centralizer rings (9), the first and second centralizer rings comprising regions of the coupling having reduced inner diameters adapted to engage the outer surface of the respective pipe segments (1).

6. The coupling (2) as claimed in any one of claims 1 to 5, further comprising first and second pin seal rings (8) formed within the bore on the inner surface of the coupling, the pin seal rings being adapted to abut and seal against respective ends of the pipe segments engaged within the coupling; wherein, the pin seal ring is adapted to direct bending loads into the corrugated coupling section.

## Patentansprüche

1. Eine Kupplung (2) zum Verbinden von zwei Rohr-Segmenten (1), wobei jedes von den Rohr-Segmenten ein Stift-Ende aufweist, welches einen Bereich aufweist, der einen Gewinde-Abschnitt hat, der an einer Außenfläche davon bereitgestellt ist, wobei die Kupplung aufweist:
- einen im Allgemeinen rohrförmigen Körper, der ein Loch, welches sich dorthindurch erstreckt, eine Außenfläche, eine Innenfläche und ein erstes und ein zweites Ende, die entgegengesetzt sind, hat, und
- einen geriffelten Bereich (20), der sich zwischen dem ersten und dem zweiten Ende befindet,
- wobei die Innenfläche von jedem von dem ersten und dem zweiten Ende einen Gewinde-Abschnitt (3) aufweist, der angepasst ist, um mit dem Gewinde-Abschnitt eines korrespondierenden Stift-Endes eines Rohr-Segments (1) in Eingriff zu sein,
- **dadurch gekennzeichnet, dass**:
- die Kupplung (2) eine im Allgemeinen konstante Wanddicke hat und
- der geriffelte Bereich (20) einen Querschnitt aufweist, der mindestens einen Scheitel (5) an der Außenfläche davon hat, wodurch, wenn in Verwendung, die Kupplung (2) angepasst ist, um Quer-Auslenkung aufzunehmen, während sie Torsions-, Kompressions-/Tensions- und Druck-Leistung-Charakteristiken der Rohr-Segmente beibehält.

2. Die Kupplung (2) wie in Anspruch 1 beansprucht, wobei der geriffelte Bereich ein Querschnittsprofil aufweist, welches mindestens einen Scheitel (5) und mindestens zwei Täler (4, 6) hat, die an der Außenfläche der Kupplung (2) gebildet sind.

3. Die Kupplung (2) wie in Anspruch 1 oder 2 beansprucht, wobei sich der geriffelte Bereich im Allgemeinen zentral entlang der Länge des rohrförmigen Körpers befindet.

4. Die Kupplung (2) wie in irgendeinem der Ansprüche 1 bis 3 beansprucht, wobei die Wanddicke und Größe von Riffelungen angepasst ist, um eine vorbestimmte Biege-/Quer-Festigkeit bereitzustellen, wodurch Belastung auf die GewindeVerbindungen zwischen der Kupplung und den Rohr-Segmenten minimiert wird.

5. Die Kupplung (2) wie in irgendeinem der Ansprüche 1 bis 4 beansprucht, wobei das erste und das zweite Ende jeweils zugeordnet einen ersten und einen zweiten Zentrier-Ring (9) aufweisen, wobei der erste und der zweite Zentrier-Ring Bereiche der Kupplung aufweisen, die reduzierte Innendurchmesser haben, angepasst, um mit der Außenfläche der jeweiligen Rohr-Segmente (1) in Eingriff zu sein.

6. Die Kupplung (2) wie in irgendeinem der Ansprüche 1 bis 5 beansprucht, welche ferner einen ersten und einen zweiten Stift-Dichtung-Ring (8) aufweist, die innerhalb des Lochs an der Innenfläche der Kupplung gebildet sind, wobei die Stift-Dichtung-Ringe angepasst sind, um anzuliegen an und abzudichten gegen jeweilige Enden der Rohr-Segmente, die in die Kupplung eingreifen, wobei der Stift-Dichtung-Ring angepasst ist, um Biege-Lasten in den geriffelten Kupplung-Bereich zu leiten.

## Revendications

1. Raccord (2) destiné à raccorder deux segments de conduite (1), chacun des segments de conduite incluant un bout de cheville comprenant une section ayant une portion filetée ménagée sur une surface externe de celle-ci, le raccord comprenant :
- un corps généralement tubulaire traversé par un alésage, une surface externe, une surface interne, et des premier et second bouts opposés ; et,
- une section ondulée (20) située entre les premier et second bouts ;
- la surface interne de chacun des premier et second bouts incluant une portion filetée (3) adaptée pour mettre en prise la portion filetée d'un bout de cheville correspondant d'un segment de conduite (1) ;
- **caractérisé en ce que** :
- le raccord (2) a une épaisseur de paroi généralement constante ; et,
- la section ondulée (20) comprend une section transversale ayant au moins un pic (5) sur sa surface externe, moyennant quoi, en utilisation, le raccord (2) est adapté pour se conformer à une déflexion transversale tout en maintenant des caractéristiques de performance en torsion, compression/tension et pression des segments de conduite.

2. Raccord (2) selon la revendication 1, dans lequel la section ondulée comprend un profil en section transversale ayant au moins un pic (5) et au moins deux vallées (4, 6) formées sur la surface externe du raccord (2).

3. Raccord (2) selon la revendication 1 ou 2, dans lequel la section ondulée est située de façon générale de manière centrale suivant la longueur du corps tubulaire.

4. Raccord (2) selon l'une quelconque des revendications 1 à 3, dans lequel l'épaisseur de paroi et la taille des ondulations est adaptée pour conférer une raideur en flexion/transversale prédéterminée, minimisant de ce fait la contrainte sur les raccordements filetés entre le raccord et les segments de conduite.

5. Raccord (2) selon l'une quelconque des revendications 1 à 4, dans lequel les premier et second bouts comprennent, respectivement, des première et seconde bagues de centrage (9), les première et seconde bagues de centrage comprenant des régions du raccord ayant des diamètres internes réduits adaptés pour mettre en prise la surface externe des segments de conduite (1) respectifs.

6. Raccord (2) selon l'une quelconque des revendications 1 à 5, comprenant en outre des première et seconde bagues d'étanchéité de cheville (8) formées au sein de l'alésage sur la surface interne du raccord, les bagues d'étanchéité de cheville étant adaptées pour abouter et étanchéifier des bouts respectifs des segments de conduite mis en prise au sein du raccord ; dans lequel, la bague d'étanchéité de cheville est adaptée pour diriger des charges de flexion dans la section de couplage ondulée.
